# EUROPÄISCHE PATENTSCHRIFT

(11) **EP 0 963 895 B1**
(45) Veröffentlichungstag und Bekanntmachung des Hinweises auf die Patenterteilung: **19.11.2003**
(21) Anmeldenummer: 99110523.0
(22) Anmeldetag: 01.06.1999
(51) Int. Cl.: B61C 17/00, B61D 27/00

(54) **Fahrzeug, insbesondere Schienenfahrzeug**
Vehicle, especially railway vehicle
Véhicule, notamment véhicule ferroviaire

(30) Priorität: 10.06.1998 AT 100298
(43) Veröffentlichungstag der Anmeldung: 15.12.1999
(73) Patentinhaber: Connex Verkehr GmbH, 60389 Frankfurt (DE)
(72) Erfinder: Sommerer, Rudolf, 6200 Jenbach (AT); Iwainsky, Heinz, 6200 Jenbach (AT)
(74) Vertreter: Torggler, Paul Norbert, Dr.

(56) Entgegenhaltungen:
- DE-A- 2 750 314
- US-A- 1 985 636
- US-A- 2 083 768

## Beschreibung

Die Erfindung betrifft ein Fahrzeug, insbesondere ein Schienenfahrzeug, mit einer Kühlanlage für mindestens einen Antriebsmotor und mit einer Klimaanlage für den Fahrgastraum.

Klimaanlage und Kühlanlage sind separate Baugruppen thermodynamischer Funktionalität, die beim Stand der Technik getrennt in verschiedenen Bereichen des Fahrzeuges angeordnet werden. Beispielsweise ist es bei Bussen üblich, die Kühlanlagen unterflur anzuordnen, während die Klimaanlage auf dem Dach angeordnet ist. Bei Schienenfahrzeugen ist es auch bereits bekannt und vorteilhaft, die Kühlaggregate des bzw. der Antriebsmotoren am Dach anzuordnen. Bei kurzen Fahrzeugen, beispielsweise modulartigen Gliederzügen, ist allerdings der Platz auf dem Dach im allgemeinen knapp bemessen.

Aus der US-A-1,985,636 ist es bekannt, den Kühler der Kühlanlage sowie den Kondensator und Verdampfer der Klimaanlage am bzw. unter dem Dach eines Schienenfahrzeuges anzuordnen. Dies hat jedoch den Nachteil, dass diese Bauteile nur bei Bewegung des Schienenfahrzeuges in eine Richtung ausreichend vom Fahrtwind umströmt werden. Bei Bewegung des Schienenfahrzeuges in die entgegengesetzte Richtung werden die Bauteile nicht ausreichend durch den Fahrtwind gekühlt.

Aufgabe der Erfindung ist es daher, ein Fahrzeug zu schaffen, bei dem Klimaanlage und Kühlanlage insgesamt einen geringen Platzbedarf einnehmen und darüber hinaus unabhängig von der Fahrtrichtung des Fahrzeuges ausreichend vom Fahrtwind umströmt werden können.

Die erfindungsgemäße Aufgabe wird dadurch gelöst, daß der Kühler der Kühlanlage sowie zumindest der Kondensator und der Verdampfer der Klimaanlage an bzw. in einer gemeinsamen Kammer auf dem Dach des Schienenfahrzeuges angeordnet sind.

Damit ist es möglich, die relativ sperrigen Teile der Kühlanlage und Klimaanlage, nämlich die Kühlerelemente, den Kondensator und dem Verdampfer praktisch ineinander verschachtelt platzgünstig anzuordnen. Die beim Stand der Technik nachteilige Fahrtrichtungsabhängigkeit ist beseitigt.

Die Anordnung der beiden Anlagen, nämlich Kühlanlage und Klimaanlage auf dem Dach bringt eine Reihe wichtiger Vorteile: Die Abfuhrmöglichkeit der Wärme wird verbessert. Weiters ist die angesaugte Luft im Dachbereich wesentlich reiner als im Unterflurbereich, wodurch die Störanfälligkeit und Verschmutzung der Kühlanlage und der Klimaanlage wesentlich herabgesetzt werden kann. Da kein Raum für die Kühl- und die Klimaanlage im Unterflurbereich benötigt wird, kann diese zur Gänze für die Antriebsanlage genützt werden.

Weitere Vorteile und Einzelheiten der Erfindung werden anhand der nachfolgenden Figurenbeschreibung näher erläutert.
Die Fig. 1 zeigt ein Ausführungsbeispiel eines erfindungsgemäßen Schienenfahrzeuges in einer Seitenansicht,
die Fig. 2 zeigt eine schematische Draufsicht,
die Fig. 3 zeigt einen Schnitt quer zur Längsrichtung des Schienenfahrzeuges in dessen Dachbereich.

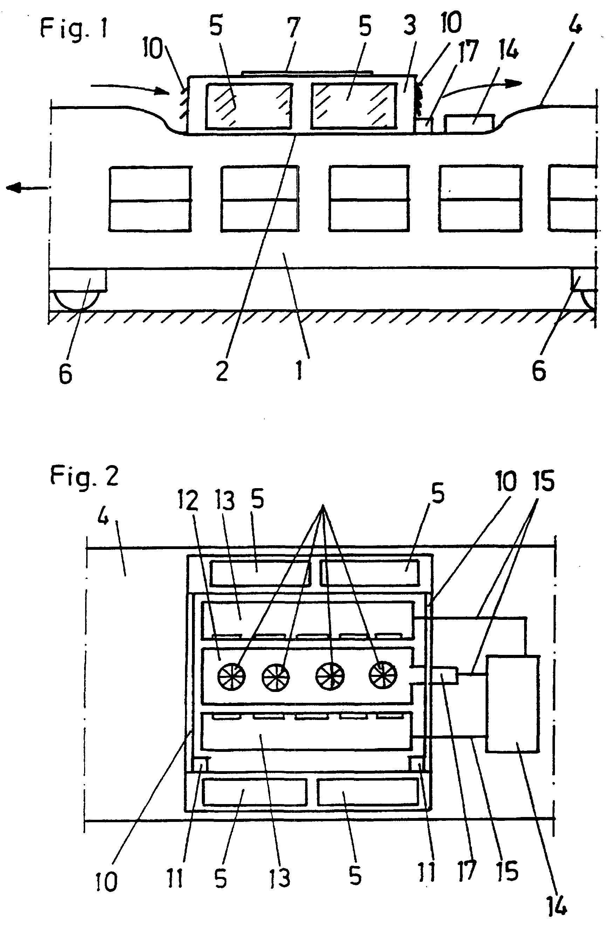

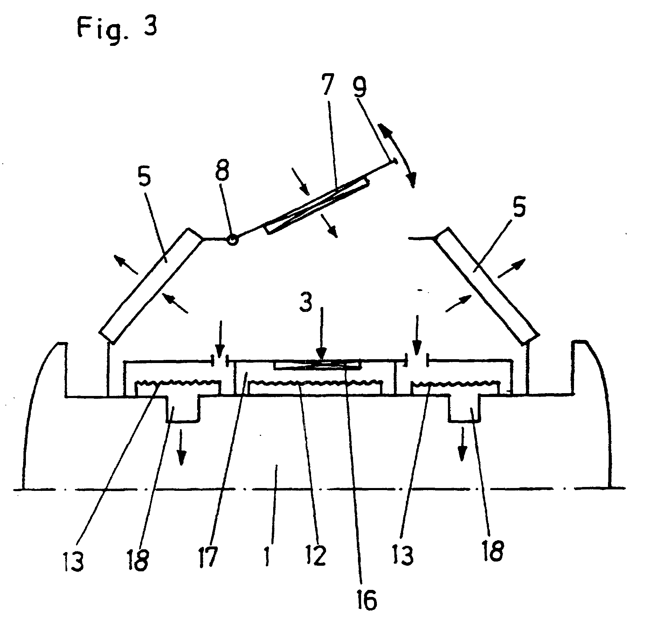

Bei den in den Fig. 1 bis 3 dargestellten Ausführungsbeispielen ist in einem abgesenkten Bereich 2 des Daches 4 eine Kammer 3 vorgesehen. Im linken und rechten abgeschrägten Wandbereich der Kammer 3 sind Kühlerelemente 5 angeordnet, die in an sich bekannter Weise von Kühlmittel durchflossen sind, um die Antriebsmotoren 6 zu kühlen. Die dafür nötigen Kühlschläuche und/oder -rohre sind der Übersichtlichkeit halber nicht eingezeichnet. Die Kühlelemente 5 werden von Luft aus dem Innenraum der Kammer 3 von innen nach außen durchströmt. Um diese Luftströmung aufrechtzuerhalten, sind beim dargestellten Ausführungsbeispiel zwei Maßnahmen vorgesehen, nämlich ein in die Kammer blasender Lüfter im Dachbereich der Kammer. Dieser Lüfter 7 ist - wie die Fig. 3 zeigt - an einem um ein Scharnier 8 hochklappbaren Deckel 9 angeordnet. Das Hochschwenken des Deckels erlaubt es zu Wartungszwecken ins Innere der Kammer 3 zu gelangen.

Neben diesem Lüfter 7 nützen die dargestellten Ausführungsbeispiele noch den Fahrtwind. Dazu sind vome und hinten an der Kammer jalousieartige Klappen 10 vorgesehen, die über Antriebseinheiten 11 motorisch verstellt werden können. Die vorderen Klappen 10 sind dabei geöffnet und die hinteren Klappen - jeweils bezogen auf die Fahrtrichtung - geschlossen. Damit kann der Fahrtwind vome eintreten und durch die Kühlerelemente 5 seitlich aus der Kammer austreten. Die dazu vorgesehene Abschottung des Lüfters (7) durch eine weitere Jalousie ist der Übersichtlichkeit halber nicht dargestellt.

Erfindungsgemäß sind nun nicht nur die Kühlelemente des Kühlers für die Antriebsmotoren 6 im Dachbereich des Schienenfahrzeuges 1 angeordnet. Vielmehr sind auch die sperrigen Teile der Klimaanlage, nämlich der Kondensator 12 und der hier zweiteilig ausgeführte Verdampfer 13 im Dachbereich angeordnet und zwar im Bodenbereich der Kammer 3, wie dies die Fig. 2 und 3 zeigen. In Fig. 2 ist der Übersichtlichkeit halber der Deckel 9 samt Lüfter 7 nicht dargestellt.
Die übrigen Teile der Klimaanlage, insbesondere ein Kompressor und allfällige Drosselventile können außerhalb der Kammer 3 angeordnet sein, wie dies schematisch mit der Bezugsziffer 14 angedeutet ist. Die Verbindung erfolgt über Kältemittelleitungen 15, die nur schematisch und einfach dargestellt sind, weil es für den Fachmann klar ist, wie diese auszuführen und anzuschließen sind.

Die Zuluft für den Kondensator 12 erfolgt aus dem Innenraum der Kammer 3, wobei vier Ventilatoren 16 eine Zwangsbelüftung vornehmen. Die Luftführung erfolgt dabei so, daß die warme Abluft des Kondensators 12 über einen Kanal 17 aus der Kammer ins Freie gelangt.

Die Zuluft für die Verdampfer 13 erfolgt ebenfalls aus der Kammer 3, wobei die abgekühlte Luft dann über Kanäle 18 in den nicht näher dargestellten Fahrgastraum in Inneren des Schienenfahrzeuges 1 gelangt. Die Kammer 3 samt Kühler 5 und Klimaanlagenkomponenten 12, 13 kann als vorgefertigtes Modul ausgeführt sein, weiches am Dach des Schienenfahrzeuges befestigbar ist. Es kann aber auch vorgesehen sein, die Klimaanlage von den übrigen Einheiten zu trennen, wobei die Klimaanlage beispielsweise direkt auf einem Abstandrahmen auf den Dach des Schienenfahrzeuges montiert werden kann, insbesondere unter Anwendung von Klebetechniken.

Bei den dargestellten Ausführungsbeispielen herrscht in der Kammer 3 ein Überdruck, sei es durch den Fahrtwind oder durch den nach innen blasenden Lüfter 7. Grundsätzlich ist es aber auch möglich, die Förderrichtung des Lüfters 7 umzukehren. Damit könnte der Kondensator 12 bzw. dessen Ventilatoren 16 frei in den Innenraum blasen. Die Ansaugung der Luft für den Kondensator könnte dann stimseitig über Luftführungselemente erfolgen, insbesondere unter Ausnützung des Fahrtwindes. Die Luftansaugung für den Verdampfer kann dann beispielsweise über geschlossene Kanäle von außen erfolgen. Bei dieser Förderrichtung des Lüfters werden die Kühlerelemente des Kühlers für den bzw. die Antriebsmotoren von außen nach innen von der Kühlluft durchströmt.

## Patentansprüche

1. Fahrzeug, insbesondere Schienenfahrzeug mit einer Kühlanlage für mindestens einen Antriebsmotor und mit einer Klimaanlage für den Fahrgastraum, wobei der Kühler der Kühlanlage sowie der Kondensator (12) und Verdampfer (13) der Klimaanlage am Dach (4) des Fahrzeuges angeordnet sind, **dadurch gekennzeichnet, daß** die vorgenannte Geräte an bzw. in einer gemeinsamen Kammer (3) auf dem Dach angeordnet sind.

2. Fahrzeug nach Anspruch 1, **dadurch gekennzeichnet, daß** der Kühler aus einem oder mehreren einzelnen, von Kühlmittel durchflossenen Kühlerelementen (5) aufgebaut ist, die im Bereich der Wand der Kammer (3), vorzugsweise links und rechts seitlich, angeordnet und von Kühlluft durchströmbar sind.

3. Fahrzeug nach Anspruch 1 oder 2, **dadurch gekennzeichnet, daß** die Kammer (3) - bezogen auf die Fahrtrichtung - vorne und hinten motorisch öffen- und verschließbare Luftöffnungen aufweist.

4. Fahrzeug nach Anspruch 3, **dadurch gekennzeichnet, daß** zum Verschließen der Luftöffnungen jalousieartig verschwenkbare Klappen (10) vorgesehen sind.

5. Fahrzeug nach einem der Ansprüche 1 bis 4, **dadurch gekennzeichnet, daß** in einer Kammerwand, vorzugsweise in der Decke, zumindest ein - vorzugsweise von außen in die Kammer (3) blasender - Lüfter (7) angeordnet ist.

6. Fahrzeug nach einem der Ansprüche 1 bis 5, **dadurch gekennzeichnet, daß** die Kammer (3) einen, vorzugsweise hoch schwenkbaren Deckel (9) aufweist.

7. Fahrzeug nach Anspruch 5 und Anspruch 6, **dadurch gekennzeichnet, daß** der Lüfter (7) im Deckel (9) angeordnet ist.

8. Fahrzeug nach einem der Ansprüche 1 bis 7, **dadurch gekennzeichnet, daß** der Kompressor (14) der Klimaanlage außerhalb der Kammer (3) angeordnet ist.

9. Fahrzeug nach einem der Ansprüche 1 bis 8, **dadurch gekennzeichnet, daß** der Kondensator (12) und der Verdampfer (13) der Klimaanlage im Bodenbereich der Kammer (3) angeordnet sind.

10. Fahrzeug nach einem der Ansprüche 1 bis 9, **dadurch gekennzeichnet, daß** der Kondensator (12) der Klimaanlage mit Ventilatoren (16) zwangsbelüftet ist.

11. Fahrzeug nach Anspruch 10, **dadurch gekennzeichnet, daß** die warme Abluft vom Kondensator (12) über mindestens einen Kanal aus der Kammer (3) ins Freie geführt wird.

12. Fahrzeug nach einem der Ansprüche 1 bis 11, **dadurch gekennzeichnet, daß** die Zuluftführung für den Verdampfer (13) aus dem Innenraum der Kammer (3) erfolgt und die vom Verdampfer (13) abgekühlte Luft dem Fahrgastraum zugeführt wird.

13. Fahrzeug nach einem der Ansprüche 1 bis 12, **dadurch gekennzeichnet, daß** die Kammer (3) samt Kühler und Klimaanlagenkomponenten als vorgefertigtes Modul ausgeführt ist, welches am Dach (4) des Fahrzeuges befestigbar ist.

## Claims

1. Vehicle, in particular rail vehicle with a cooling system for at least one drive motor and with an air-conditioning system for the passenger compartment, the cooler of the cooling system and also the condenser (12) and evaporator (13) of the air-conditioning system being arranged on the roof (4) of the vehicle, **characterized in that** the abovementioned devices are arranged on or in a common chamber (3) on the roof.

2. Vehicle according to claim 1, **characterized in that** the cooler is constructed of one or more individual cooler elements (5) through which coolant flows, which are arranged in the region of the wall of the chamber (3), preferably left and right to the side, and through which cooling air can flow.

3. Vehicle according to claim 1 or 2, **characterized in that** the chamber (3) has air vents which can be opened and closed by motor operation at the front and rear - relative to the direction of travel.

4. Vehicle according to claim 3, **characterized in that** swivellable flaps (10) are provided to close the air vents in the manner of blinds.

5. Vehicle according to one of claims 1 to 4, **characterized in that** at least one ventilator (7) - preferably blowing from outside into the chamber (3) - is arranged in one chamber wall, preferably in the top.

6. Vehicle according to one of claims 1 to 5, **characterized in that** the chamber (3) has a cover (9) which is preferably able to be swivelled up.

7. Vehicle according to claim 5 and claim 6, **characterized in that** the ventilator (7) is arranged in the cover (9).

8. Vehicle according to one of claims 1 to 7, **characterized in that** the compressor (14) of the air-conditioning system is arranged outside the chamber (3).

9. Vehicle according to one of claims 1 to 8, **characterized in that** the condenser (12) and the evaporator (13) of the air-conditioning system are arranged in the base region of the chamber (3).

10. Vehicle according to one of claims 1 to 9, **characterized in that** the condenser (12) of the air-conditioning system is pressure-cooled with ventilators (16).

11. Vehicle according to claim 10, **characterized in that** the warm exhaust air from the condenser (12) is passed via at least one channel out of the chamber (3) into the open air.

12. Vehicle according to one of claims 1 to 11, **characterized in that** the supply air for the evaporator (13) travels from the inside of the chamber (3) and the air cooled by the evaporator (13) is supplied to the passenger compartment.

13. Vehicle according to one of claims 1 to 12, **characterized in that** the chamber (3) together with cooler and air-conditioning system components is developed as a prefabricated module which can be attached to the roof (4) of the vehicle.

## Revendications

1. Véhicule, en particulier véhicule ferroviaire, avec une installation de refroidissement pour au moins un moteur d'entraînement et avec une installation de climatisation pour l'espace réservé aux passagers, le radiateur de l'installation de refroidissement, ainsi que le condenseur (12) et l'évaporateur (13) de l'installation de climatisation, étant disposés dans le toit (4) du véhicule, **caractérisé en ce que** les appareils précités sont disposés sur ou dans une chambre (3) commune, disposée sur le toit.

2. Véhicule selon la revendication 1, **caractérisé en ce que** le radiateur est formé d'un ou de plusieurs éléments de radiateurs (5) individuels, traversés par un écoulement de fluide. de refroidissement, disposés dans la zone de la paroi de la chambre (3), de préférence latéralement à gauche et à droite et susceptibles d'être traversés par un écoulement d'air de refroidissement.

3. Véhicule selon la revendication 1 ou 2, **caractérisé en ce que** la chambre (3) présente, à l'avant et à l'arrière - en se référant à la direction de roulage -, des ouvertures d'air pouvant être ouvertes et fermées par un moteur.

4. Véhicule selon la revendication 3, **caractérisé en ce que** des volets (10) pivotant à la façon d'une persienne sont prévus pour fermer les ouvertures d'air.

5. Véhicule selon l'une des revendications 1 à 4, **caractérisé en ce que**, dans une paroi de chambre, de préférence dans le plafond, est disposé au moins un ventilateur (3) - de préférence soufflant depuis l'extérieur dans la chambre (3).

6. Véhicule selon l'une des revendications 1 à 5, **caractérisé en ce que** la chambre (3) présente un couvercle (9) pouvant être, de préférence, relevé par pivotement.

7. Véhicule selon la revendication 5 et la revendication 6, **caractérisé en ce que** le ventilateur (7) est disposé dans le couvercle (9).

8. Véhicule selon l'une des revendications 1 à 7, **caractérisé en ce que** le compresseur (14) de l'installation de climatisation est disposé à l'extérieur de la chambre (3).

9. Véhicule selon l'une des revendications 1 à 8, **caractérisé en ce que** le condensateur (12) et l'évaporateur (13) de l'installation de climatisation sont disposés dans la zone de fond de la chambre (3).

10. Véhicule selon l'une des revendications 1 à 9, **caractérisé en ce que** le condenseur (12) de l'installation de climatisation est soumis à une aération forcée à l'aide de ventilateurs (16).

11. Véhicule selon la revendication 10, **caractérisé en ce que** l'air d'évacuation chaud venant du condenseur (12) est guidé depuis la chambre (3) à l'air libre, par au moins un canal.

12. Véhicule son une des revendications 1 à 11, **caractérisé en ce que** le guidage de l'amenée d'air prévu pour l'évaporateur (13) se fait depuis l'espace intérieur de la chambre (3) et l'air, refroidi par l'évaporateur (13), est amené dans l'espace réservé aux passagers.

13. Véhicule selon des revendications 1 à 12, **caractérisé en ce que** la chambre (3), avec le radiateur et les composants de l'installation de climatisation, est réalisée sous la forme de module préfabriqué, susceptible d'être fixé au toit (4) du véhicule.
